# EUROPÄISCHE PATENTSCHRIFT

(11) **EP 2 044 812 B1**
(45) Veröffentlichungstag und Bekanntmachung des Hinweises auf die Patenterteilung: **16.03.2011**
(21) Anmeldenummer: 06828799.4
(22) Anmeldetag: 21.07.2006
(51) Int. Cl.: H05B 37/02

(54) **BELEUCHTUNGSSYSTEM MIT LICHTSENSOR ZUR VORSCHALTGERÄTSTEUERUNG**
LIGHTING SYSTEM COMPRISING A LIGHT SENSOR FOR CONTROLLING A BALLAST
SYSTÈME D'ÉCLAIRAGE POURVU D'UN DÉTECTEUR DE LUMIÈRE POUR LA COMMANDE D'UN BALLAST

(43) Veröffentlichungstag der Anmeldung: 08.04.2009
(73) Patentinhaber: Osram Gesellschaft mit beschränkter Haftung, 81543 München (DE)
(72) Erfinder: SCHLEICHER, Gotthard, 83379 Wonneberg (DE)
(86) Internationale Anmeldenummer: PCT/EP2006/007213
(87) Internationale Veröffentlichungsnummer: WO 2008/009306

(56) Entgegenhaltungen:
- DE-A1- 19 644 971
- US-A1- 5 581 158
- US-A1- 5 778 146
- TROSTL A ED - INSTITUTE OF ELECTRICAL AND ELECTRONICS ENGINEERS: "Self configuring dimming interface for fluorescent lamp ballasts" CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001, CONFERENCE RECORD OF THE IEEE INDUSTRY APPLICATIONS CONFERENCE. IAS ANNUAL MEETING, NEW YORK, NY : IEEE, US, Bd. VOL. 1 OF 4. CONF. 36, 30. September 2001 (2001-09-30), Seiten 906-911, XP010561808 ISBN: 0-7803-7114-3

## Beschreibung

### Technisches Gebiet

Die vorliegende Erfindung betrifft durch Lichtempfänger gesteuerte elektronische Vorschaltgeräte für Lampen. Dabei wird der Begriff "Beleuchtungssystem" für das elektronische Vorschaltgerät zusammen mit dem Lichtempfänger zu seiner Steuerung verwendet, wobei die passende Lampe beinhaltet sein kann, aber nicht muss. Der Begriff "Lampe" gilt dabei für Leuchtmittel im allgemeinsten Sinn einschließlich LED und LED-Module.

### Stand der Technik

Es ist bekannt, elektronische Vorschaltgeräte und damit den Betrieb der von ihnen versorgten Lampen über Lichtempfänger zu steuern. Die Lichtempfänger können bei dimmbaren Vorschaltgeräten und Lampen zur Helligkeitsregelung oder allgemein für Ein- und Ausschaltvorgänge abhängig von bestimmten Helligkeitsschwellenwerten oder von der Abdunkelung bestimmter Stellen (beispielsweise bei Lichtschranken) oder zu ähnlichen Zwecken eingesetzt werden. Dazu werden lichtempfindliche Fotodioden elektrisch an einem Vorschaltgerät angeschlossen. DE 196 44 971 A1 offenbart ein elektronisches Vorschaltgerät, wobei zur Übertragung des Raunlichts ein Lichtleiter eingesetzt wird.

### Darstellung der Erfindung

Der Erfindung liegt das technische Problem zugrunde, ein verbessertes Beleuchtungssystem dieses Typs anzugeben, das durch einen günstigen Kompromiss zwischen Zuverlässigkeit und technischem Aufwand verbesserte Einsatzmöglichkeiten bietet.

Die Erfindung bezieht sich auf ein Beleuchtungssystem mit einem elektronischen Vorschaltgerät und einem mit dem Vorschaltgerät signaltechnisch verbundenen Lichtempfänger zum Aufnehmen von Umgebungslicht und zur Steuerung des Vorschaltgeräts ansprechend auf das Umgebungslicht, gekennzeichnet durch einen Optokoppler, der mit dem Vorschaltgerät elektrisch verbunden ist, und einen Lichtwellenleiter, der den Lichtempfänger optisch mit dem Optokoppler verbindet,
sowie auf ein Verfahren zum Betreiben einer Lampe mit einem solchen Beleuchtungssystem, bei welchem Umgebungslicht über einen Lichtempfänger erfasst wird, über einen mit dem Lichtempfänger verbundenen Lichtwellenleiter zu einem Optokoppler transportiert wird und durch den Optokoppler in ein elektrisches Signal umgewandelt wird, welches einem elektronischen Vorschaltgerät zugeführt wird und zur Steuerung dieses Vorschaltgeräts ansprechend auf das erfasste Umgebungslicht dient, wobei das Vorschaltgerät die Lampe ansprechend auf die Steuerung betreibt.

Bevorzugte Ausgestaltungen sind in den abhängigen Ansprüchen angegeben und werden im Folgenden erläutert. Die gesamte Offenbarung ist dabei sowohl im Hinblick auf den Vorrichtungscharakter als auch auf den Verfahrenscharakter der Erfindung zu verstehen, ohne dass dazwischen im Einzelnen explizit unterschieden wird.

Die Grundidee der Erfindung besteht im Einsatz eines Lichtwellenleiters zwischen dem Lichtempfänger und dem Vorschaltgerät. Der Lichtwellenleiter soll den Lichtempfänger optisch mit einem Optokoppler verbinden, der seinerseits elektrisch mit dem Vorschaltgerät verbunden ist. Seitens des Lichtempfängers soll allerdings keine optoelektronische Umwandlung vorgesehen sein; der Lichtempfänger soll hier also lediglich die Einrichtung zum Lichteintritt bezeichnen, kann im einfachsten Fall also eine Endfläche des Lichtwellenleiters sein. Das zu erfassende Licht wird also ohne Umwandlung in elektrische Signale durch den Lichtwellenleiter bis zu dem Optokoppler transportiert, der seinerseits bei Bedarf auch in direkter Nähe des Vorschaltgeräts angeordnet oder vorzugsweise sogar in dem Vorschaltgerät baulich integriert sein kann.

Der Lichtempfänger entspricht dem Lichtsensor aus dem Stand der Technik also nur insoweit, als er Licht aufnimmt und die Leitung zu dem Vorschaltgerät ein entsprechendes Signal einspeist, das hier allerdings selbst ein Lichtsignal ist. Durch den Verzicht auf einen elektrischen Lichtsensor kann der Lichtempfänger, also der Kopf des Lichtwellenleiters oder eine dort angebrachte optische Vorrichtung, sehr klein und unauffällig gestaltet werden und auch an spezifische bauliche Gegebenheiten gut angepasst werden. Es können also im Hinblick auf das ästhetische Erscheinungsbild sowie auf die Anpassung an ein vorgegebenes Design verbesserte Lösungen gefunden werden, indem der Lichtempfänger in sehr unauffälliger und anpassungsfähiger Weise integriert werden kann. Konventionelle Lichtempfänger sind hingegen vergleichsweise groß und wirken optisch häufig sehr störend. Je nach baulicher Realisierung, beispielsweise in Leuchten integriert oder an Decken angebracht, können sie auf das Design anderer Einrichtungen nachteiligen Einfluss nehmen.

Ferner können sich durch den Wegfall der elektrischen Übertragung zwischen dem Lichtempfänger und dem Optokoppler auch weitere Vorteile ergeben, etwa die Vermeidung elektromagnetischer Einstreuungen, der Wegfall von Problemen mit Isolationsfestigkeit, Spannungsschutz und dgl. Speziell die Lichteintrittsöffnung am Kopf des Lichtwellenleiters bzw. die dort als Lichtempfänger angebrachte optische Vorrichtung sind spannungsisoliert und damit inhärent sicher. Notwendige Öffnungen zur Montage können auf sehr kleine Durchmesser im Millimeterbereich reduziert werden. Kurzschlussrisiken fallen weg.

Das Umgebungslicht kann von der räumlichen Umgebung stammen, die von der durch das Vorschaltgerät betriebenen Lampe zu beleuchten ist. Dann kann durch den Lichtempfänger die Helligkeit durch die Lampenbeleuchtung oder durch eine anderweitige künstliche oder auch Tageslicht-Beleuchtung oder eine Mischbeleuchtung erfasst werden, um beispielsweise einen Dimmzustand des Vorschaltgeräts und der Lampe anzupassen. Es kann auch um eine Anwesenheitserkennung von sich bewegenden Objekten in der Umgebung gehen, wie weiter unten noch näher erläutert, und zwar einschl. Lichtschranken, bei denen also Umgebungslicht durch sich bewegende Objekte ausgeblendet wird.

Der Lichtwellenleiter zwischen Lichtempfänger und Optokoppler muss nicht notwendigerweise durchgehend sein. Es kann in Einzelfällen von Interesse sein, eine elektrische Einrichtung zwischenzuschalten, etwa zur Signalverstärkung bei langen Übertragungsstrecken oder zur Signalverteilung, - mischung oder -einkopplung bei komplexeren Beleuchtungssystemen. Bevorzugt ist jedoch, dass der Lichtwellenleiter durchgehend ausgeführt ist, also zwischen dem Lichtempfänger und dem Optokoppler eine rein optische Übertragung über optische Leiter stattfindet. Weiterhin ist dieser Lichtwellenleiter vorzugsweise auch einteilig, also nicht aus mehreren baulich getrennten Teilen zusammengesetzt, um den baulichen Aufwand und die Verluste zu minimieren.

Ferner ist bevorzugt, an sich bekannte optische Steckverbindungselemente für die Erfindung auszunutzen, also den Lichtwellenleiter zumindest an dem Optokoppler und/oder an dem Lichtempfänger durch ein optisches Steckverbindungselement zu montieren. Da in den bevorzugten Fällen das Ende des Lichtwellenleiters selbst als Lichtempfänger ausgeführt ist, betrifft dies insbesondere ein optisches Steckverbindungselement an dem Optokoppler. Da der Optokoppler vorzugsweise in dem Vorschaltgerät integriert ist, ergibt sich in diesem Fall natürlich ein optisches Steckverbindungselement an dem Gerät selbst.

Eine weitere mögliche Ausgestaltung sieht einen abbildenden Lichtempfänger und Lichtwellenleiter vor, also etwa einen Lichtwellenleiter mit einer Vielzahl parallel laufender Fasern. Solche abbildenden Systeme eignen sich besonders für Anwendungen zur Anwesenheitskontrolle, weil mit ihnen ohne deutliche Änderungen des erfassten Helligkeits(mittel)werts Bewegungen detektiert werden können.

Einige der erwähnten Vorteile des Einsatzes von Lichtwellenleitern bestehen auch für zusätzliche signaltechnische Verbindungen in einem Beleuchtungssystem oder einer größeren Beleuchtungsanlage. Es ist daher bevorzugt, dass das Vorschaltgerät einen optischen Ausgang und/oder Eingang zur Datenkommunikation über einen weiteren oder denselben Lichtwellenleiter aufweist. Beispielsweise könnte ein externes Gerät mit dem Lichtwellenleiter optisch verbunden werden, um Daten auszulesen oder einzugeben, etwa indem es mit einer optischen Schnittstelle in die Nähe des Lichtempfängers gebracht wird.

Bevorzugte Anwendungsfälle liegen auch in komplexeren Beleuchtungssystemen bzw. Beleuchtungsanlagen, in denen eine Mehrzahl Vorschaltgeräte auftreten und vorzugsweise über einen gemeinsamen Lichtwellenleiter mit einem gemeinsamen Lichtempfänger verbunden sind. Dabei kann der Lichtwellenleiter so aufgeteilt sein, dass er das über den Lichtempfänger eingekoppelte Lichtsignal an die Optokoppler der verschiedenen Vorschaltgeräte liefert. Bei einer weiteren bevorzugten Ausgestaltung teilen sich die Vorschaltgeräte auch den Optokoppler und sind an einem gemeinsamen Optokoppler elektrisch angeschlossen.

Bevorzugt sind insbesondere Anwendungen im Bereich digitaler Beleuchtungsanlagen, also solcher Beleuchtungsanlagen, in denen Steuergeräte über digitale Kommunikationsprotokolle mit angeschlossenen Vorschaltgeräten kommunizieren. Dies betrifft insbesondere Beleuchtungsanlagen, die nach dem sog. DALI-Protokoll (Digital Adressable Lighting Interface) arbeiten.

Im Folgenden soll die Erfindung anhand eines Ausführungsbeispiels näher erläutert werden, wobei die offenbarten Einzelmerkmale auch in anderen Kombinationen erfindungswesentlich sein können und die nachfolgende wie auch die vorstehende Beschreibung sowohl auf die Vorrichtungskategorie als auch auf die Verfahrenskategorie der Erfindung bezogen sind.

### Kurze Beschreibung der Zeichnung

- Figur 1: zeigt ein vereinfachtes Blockschaltbild eines erfindungsgemäßen Beleuchtungssystems.
- Figur 2: zeigt ein Blockschaltbild entsprechend Figur 1 zu einer Variante des erfindungsgemäßen Beleuchtungssystems als zweites Ausfüh- rungsbeispiel.

### Bevorzugte Ausführung der Erfindung

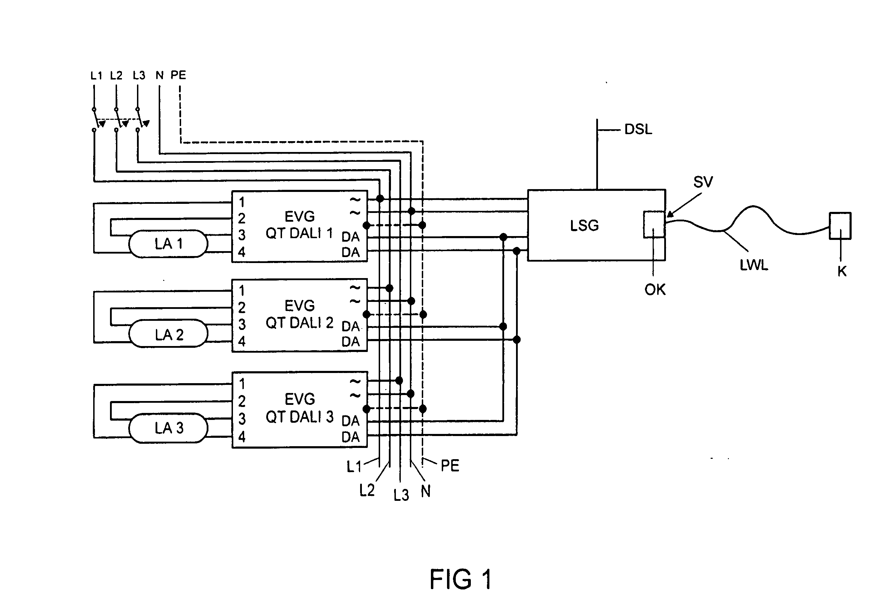

Figur 1 zeigt ein erfindungsgemäßes Beleuchtungssystem mit drei Niederdruckentladungslampen LA1, LA2 und LA3, die jeweils über Versorgungsanschlüsse 1-4 von einem jeweiligen elektronischen Vorschaltgerät "EVG QT DALI" 1-3 versorgt sind. Die Lampen LA1 - LA3 sind konventionell. Die Vorschaltgeräte sind hinsichtlich ihres elektrischen und elektronischen Aufbaus bis auf die im Folgenden erläuterten Besonderheiten ebenfalls konventionell und dem Fachmann geläufig. Es handelt sich hier konkret um Vorschaltgeräte des Herstellers OSRAM mit der Typenbezeichnung Quicktronic DALI, die für eine digitale Steuerung nach dem DALI-Protokoll ausgelegt sind. Hierzu weisen die Vorschaltgeräte digitale Steueranschlüsse DA auf, über die sie in einer Busverschaltung von einem gemeinsamen, ebenfalls für das DALI-Protokoll ausgelegten Lichtsteuergerät LSG gesteuert werden können.

Ferner sind die Vorschaltgeräte über einen Versorgungsstromkreis mit drei jeweils einem der Vorschaltgeräte zugeordneten Phasen L1, L2 und L3 sowie einem Nullleiter N und einer Prüferdeleitung PE an eine Leistungsversorgung angeschlossen.

Das Lichtsteuergerät LSG weist ferner einen digitalen Steueranschluss mit einer daran angeschlossenen digitalen Steuerleitung DSL auf, über die es über einen Tastschalter, einen PC oder in anderer Weise extern gesteuert oder auch programmiert werden kann.

Schließlich weist das Lichtsteuergerät einen über ein hier nicht im Einzelnen dargestelltes Steckverbindungselement SV zum Anschluss an einen Optokoppler OK eingesteckten Lichtwellenleiter LWL auf, der aus Glasfaser besteht und zu einem in der Zeichnung durch ein Kästchen betonten Kopf K des Lichtwellenleiters führt. Dieser Kopf K steht für eine Montagehülse, mit der das Ende des Lichtwellenleiters LWL im Außengehäuse einer Leuchte gehalten ist, die die drei Lampen LA1 - LA 3, die zugehörigen Vorschaltgeräte und das Lichtsteuergerät LSG umfasst, integriert. Es handelt sich von außen betrachtet lediglich um eine kleine, wenige Millimeter große lichtaufnehmende Fläche, die optisch mit den Lichtwellenleiter LWL verkoppelt ist und das über ihre Fläche empfangene Licht in den Lichtwellenleiter bündelt.

Der Lichtwellenleiter LWL ist im Übrigen einteilig und hat hier eine Länge von etwa 10-15 m, wobei grundsätzlich auch deutlich kleinere Längen, etwa bis 1 m, und deutlich größere Längen bis 100 m oder darüber hinaus möglich sind.

Ferner weist das Lichtsteuergerät LSG einen optischen Ausgang und einen optischen Eingang auf, die mit dem Optokoppler OK verbunden sind. So kann mit einem mobilen Handgerät und einer optischen Schnittstelle, d. h. Lichteintritts- und -austrittsfläche, daran in der Nähe des Lichtwellenleiterkopfes K eine optische Verbindung aufgenommen werden und können Daten aus dem Lichtsteuergerät oder vermittelt über dieses aus den Vorschaltgeräten ausgelesen und in diese eingegeben werden.

Der Lichtwellenleiter LWL kann insbesondere ein Faserbündel sein und damit ein, wenn auch grob gerastertes, Bild in einen ebenfalls ein Bild erfassenden Optokoppler OK eingeben. Damit kann das Lichtsteuergerät LSG auch unabhängig von der Änderung eines Helligkeitsmittelwertes Bewegungen erfassen und darauf ansprechend beispielsweise das Licht einschalten oder heller schalten.

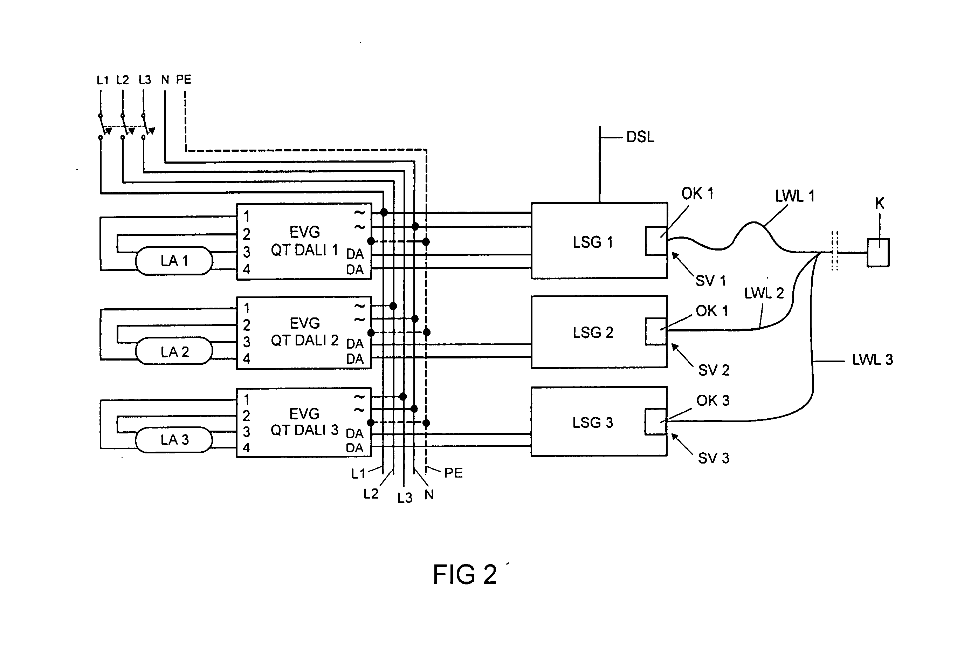

Figur 2 zeigt ein zweites Ausführungsbeispiel mit einer Variante zu dem Beleuchtungssystem aus Figur 1. Der Unterschied besteht darin, dass das Lichtsteuergerät LSG1 - LSG3 mit dem Optokoppler OK1 - OK3 und dem Steckverbindungselement SV1 - SV3 mehrfach vorhanden ist, und zwar je einmal pro Vorschaltgerät, und der Lichtwellenleiter so aufgeteilt ist, dass jeweils ein Ast LWL1 - LWL3 zu einem anderen Optokoppler OK1 -OK3 führt. Hier ist die Aufteilung also optisch zwischen den Optokopplern OK1 - OK3 in den Lichtsteuergeräten LSG1 - LSG3 und dem einheitlichen Lichtwellenleiterkopf K gegeben und nicht elektrisch wie bei der Variante aus Figur 1 zwischen dem dortigen Lichtsteuergerät LSG und den Vorschaltgeräten. Kombinationen aus elektrischen und optischen Aufteilungen sind natürlich möglich. Auch kann der gemeinsame Lichtempfänger K durch unmittelbar benachbarte Lichtwellenleiterköpfe separater Lichtwellenleiter LWL gebildet sein.

## Patentansprüche

1. Beleuchtungssystem mit
einem elektronischen Vorschaltgerät (EVG QT DALI 1 - 3) und
einem mit dem Vorschaltgerät (EVG QT DALI 1 - 3) signaltechnisch verbundenen Lichtempfänger (K) zum Aufnehmen von Umgebungslicht und zur Steuerung des Vorschaltgeräts (EVG QT DALI 1 - 3) ansprechend auf das Umgebungslicht,
mit einem Optokoppler (OK, OK1 - OK3), der mit dem Vorschaltgerät (EVG QT DALI 1 - 3) elektrisch verbunden ist,
und einem Lichtwellenleiter (LWL, LWL1 - LWL3), der den Lichtempfänger (K) optisch mit dem Optokoppler (OK, OK1 - OK3) verbindet,
wobei der Optokoppler (OK, OK1 - OK3) baulich in dem Vorschaltgerät (EVG QT DALI 1 - 3) integriert ist,
**dadurch gekennzeichnet, dass**
das Vorschaltgerät zumindest einen optischen Eingang oder Ausgang zur Datenkommunikation über den Lichtwellenleiter (LWL, LWL1 - LWL3) aufweist.

2. Beleuchtungssystem nach Anspruch 1, bei dem der Lichtwellenleiter (LWL, LWL1 - LWL3) zwischen dem Lichtempfänger (K) und dem Optokoppler (OK, OK1 - OK3) durchgehend und vorzugsweise einteilig vorliegt.

3. Beleuchtungssystem nach einem der vorstehenden Ansprüche, bei dem der Lichtwellenleiter (LWL, LWL1 - LWL3) an dem Optokoppler (OK, OK1 - OK3) und/oder an dem Lichtempfänger (K) durch ein optisches Steckverbindungselement (SV, SV1 - SV3) montierbar ist.

4. Beleuchtungssystem nach einem der vorstehenden Ansprüche, bei dem der Lichtempfänger (K) und der Lichtwellenleiter (LWL, LWL1 - LWL3) abbildend sind, um Bewegungen zu detektieren.

5. Beleuchtungssystem nach einem der vorstehenden Ansprüche mit einer Mehrzahl Vorschaltgeräte (EVG QT DALI 1-3) mit einem gemeinsamen Lichtempfänger (K), der über zumindest einen Lichtwellenleiter (LWL1 - LWL3)mit den einzelnen Vorschaltgeräten (EVG QT DALI 1 - 3) optisch verbunden ist.

6. Beleuchtungssystem nach einem der vorstehenden Ansprüche mit einer Mehrzahl Vorschaltgeräte, die mit einem gemeinsamen Optokoppler (OK) elektrisch verbunden sind, wobei der gemeinsame Optokoppler (OK) über einen gemeinsamen Lichtwellenleiter (LWL) mit einem gemeinsamen Lichtempfänger (K) verbunden ist.

7. Beleuchtungsanlage mit einem digitalen Steuergerät (LSG, LSG1 - LSG3) und einer Mehrzahl digital ansteuerbarer Vorschaltgeräte (EVG QT DALI 1-3) und mit einem Beleuchtungssystem nach einem der vorstehenden Ansprüche.

8. Verfahren zum Betreiben einer Lampe mit einem Beleuchtungssystem bzw. einer Beleuchtungsanlage nach einem der Ansprüche 1-7, bei welchem Verfahren Umgebungslicht über einen Lichtempfänger (K) erfasst wird, über einen mit dem Lichtempfänger (K) verbundenen Lichtwellenleiter (LWL, LWL1 - LWL3) zu einem Optokoppler (OK, OK1 - OK3) transportiert wird und durch den Optokoppler (OK, OK1 - OK3) in ein elektrisches Signal umgewandelt wird, welches einem elektronischen Vorschaltgerät (EVG QT DALI 1 - 3) zugeführt wird und zur Steuerung dieses Vorschaltgeräts (EVG QT DALI 1 - 3) ansprechend auf das erfasste Umgebungslicht dient, wobei das Vorschaltgerät (EVG QT DALI 1 - 3) die Lampe (LA 1-3) ansprechend auf die Steuerung betreibt.

## Claims

1. Lighting system with an electronic ballast (EVG QT DALI 1-3) and a light receiver (K), which is connected in terms of signal technology to the ballast (EVG QT DALI 1-3), for receiving ambient light and for controlling the ballast (EVG QT DALI 1-3) in response to the ambient light, with an optocoupler (OK, OK1-OK3), which is electrically connected to the ballast (EVG QT DALI 1-3), and an optical waveguide (LWL, LWL1-LWL3), which optically connects the light receiver (K) to the optocoupler (OK, OK1-OK3), the optocoupler (OK, OK1-OK3) being integrated structurally in the ballast (EVG QT DALI 1-3), **characterized in that** the ballast has at least one optical input or output for data communication via an optical waveguide (LWL, LWL1-LWL3).

2. Lighting system according to Claim 1, in which the optical waveguide (LWL, LWL1-LWL3) is present continuously or preferably integrally between the light receiver (K) and the optocoupler (OK, OK1-OK3).

3. Lighting system according to either of the preceding claims, in which the optical waveguide (LWL, LWL1-LWL3) can be fitted on the optocoupler (OK, OK1-OK3) and/or on the light receiver (K) by means of an optical plug-type connection element (SV, SV1-SV3).

4. Lighting system according to one of the preceding claims, in which the light receiver (K) and the optical waveguide (LWL, LWL1-LWL3) are imaging in order to detect movements.

5. Lighting system according to one of the preceding claims with a plurality of ballasts (EVG QT DALI 1-3) with a common light receiver (K), which is optically connected to the individual ballasts (EVG QT DALI 1-3) via at least one optical waveguide (LWL1-LWL3).

6. Lighting system according to one of the preceding claims with a plurality of ballasts, which are electrically connected to a common optocoupler (OK), the common optocoupler (OK) being connected to a common light receiver (K) via a common optical waveguide (LWL).

7. Lighting assembly with a digital control device (LSG, LSG1-LSG3) and a plurality of digitally drivable ballasts (EVG QT DALI 1-3) and with a lighting system according to one of the preceding claims.

8. Method for operating a lamp using a lighting system or a lighting assembly according to one of Claims 1-7, in which method ambient light is detected via a light receiver (K), is transported to an optocoupler (OK, OK1-OK3) via an optical waveguide (LWL, LWL1-LWL3), which is connected to the light receiver (K), and is converted by the optocoupler (OK, OK1-OK3) into an electrical signal, which is supplied to an electronic ballast (EVG QT DALI 1-3) and is used to control said ballast (EVG QT DALI 1-3) in response to the detected ambient light, the ballast (EVG QT DALI 1-3) operating the lamp (LA 1-3) in response to the control.

## Revendications

1. Système d'éclairage comprenant
un ballast ( EVG QT DALI 1 à 3 ) électronique et
un récepteur ( K ) de lumière relié en technique de signal au ballast ( EVG QT DALI 1 à 3 ) pour la réception de lumière ambiante et pour la commande du ballast ( EVG QT DALI 1 à 3 ) en réaction à la lumière ambiante,
comprenant un optocoupleur ( OK, OK1 à OK3 ) qui est relié électriquement au ballast ( EVG QT DALI 1 à 3 ),
et une fibre ( LWL, LWL1 à LWL3 ) optique qui relie le récepteur ( K ) de lumière optiquement à l'optocoupleur ( OK, OK1 à OK3 ),
dans lequel l'optocoupleur ( OK, OK1 à OK3 ) est intégré du point de vue de la construction dans le ballast ( EVG QT DALI 1 à 3 ),
**caractérisé en ce que**
le ballast a au moins une entrée ou une sortie optique pour la communication de données par l'intermédiaire de la fibre ( LWL, LWL1 à LWL3 ) optique.

2. Système d'éclairage suivant la revendication 1, dans lequel la fibre ( LWL, LWL1 à LWL3 ) optique se présente de manière continue et de préférence en une seule partie entre le récepteur ( K ) de lumière et l'optocoupleur ( OK, OK1 à OK3 ).

3. Système d'éclairage suivant l'une des revendications précédentes, dans lequel la fibre ( LWL, LWL1 à LWL3 ) peut être montée sur l'optocoupleur ( OK, OK1 à OK3 ) et/ou sur le récepteur ( K ) de lumière par un élément ( SV, SV1 à SV3 ) de liaison optique par enfichage.

4. Système d'éclairage suivant l'une des revendications précédentes, dans lequel le récepteur ( K ) optique et la fibre ( LWL, LWL1 à LWL3 ) optique peut faire l'objet d'images pour détecter des mouvements.

5. Système d'éclairage suivant l'une des revendications précédentes comprenant une multiplicité de ballasts ( EVG QT DALI 1 à 3 ) ayant un récepteur ( K ) de lumière commun qui est relié optiquement aux divers ballasts ( EVG QT DALI 1 à 3 ) par au moins une fibre ( LW1 à LWL3 ) optique.

6. Système d'éclairage suivant l'une des revendications précédentes comprenant une multiplicité de ballasts qui sont reliés électriquement à un optocoupleur ( OK ) commun, l'optocoupleur ( OK ) commun étant relié à un récepteur ( K ) de lumière commun par une fibre ( LWL ) optique commune.

7. Système d'éclairage comprenant un appareil ( LSG, LSG1 à LSG3 ) numérique de commande et une multiplicité de ballasts ( EVG QT DALI 1 à 3 ) pouvant être commandé numériquement et un système d'éclairage suivant l'une des revendications précédentes.

8. Procédé pour faire fonctionner une lampe par un système d'éclairage suivant l'une des revendications 1 à 7, procédé dans lequel on détecte de la lumière ambiante par un récepteur ( K ) de lumière, on la transporte par une fibre ( LWL, LWL1 à LWL3 ) optique reliée au récepteur ( K ) de lumière vers un optocoupleur ( OK, OK1 à OK3 ) et on la transforme par l'optocoupleur ( OK, OK1 à OK3 ) en un signal électrique, qui est envoyé à un ballast ( EVG QT DALI 1 à 3 ) électronique et qui sert à la commande de ce ballast ( EVG QT DALI 1 à 3 ) en réaction à la lumière ambiante détectée, le ballast ( EVG QT DALI 1 à 3 ) faisant fonctionner la lampe ( LA 1 à 3 ) en réaction à la commande.
